(19)

Europäisches
Patentamt
European
Patent Office
Office européen
des brevets

(11) **EP 3 010 129 A1**

(12) **EUROPEAN PATENT APPLICATION**

(43) Date of publication:
20.04.2016 Bulletin 2016/16

(51) Int Cl.:
*H02M 1/32* (2007.01)

(21) Application number: 14189224.0

(22) Date of filing: 16.10.2014

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **NXP B.V.**
**5656 AG Eindhoven (NL)**

(72) Inventor: **Joehren, Michael**
**Redhill, Surrey RH1 1SH (GB)**

(74) Representative: **Hardingham, Christopher Mark
NXP B.V.
Intellectual Property & Licensing
Red Central
60 High Street
Redhill, Surrey RH1 1SH (GB)**

Remarks:
Amended claims in accordance with Rule 137(2)
EPC.

(54) **Front-end circuits for wireless power receivers, wireless chargers and wireless charging**

(57) A front-end circuit is disclosed for a resonant wireless power receiver, the circuit comprising: input terminals for connection to an antenna; a rectifier configured to rectify an AC signal having a peak input voltage received at the input terminals and to provide an output having an output voltage; an over-voltage detector configured to at least one of detect the output voltage exceeding a threshold voltage an overvoltage and detect the peak input voltage exceeding the threshold voltage; and an over-voltage controller configured to provide an electrical short-circuit across the input terminals in response to the respective output voltage or peak input voltage exceeding the threshold voltage. Integrated circuits, NFC devices and mobile device comprising such a front-end circuit are also disclosed, as is a method for controlling wireless charging.

Figure 5

**Description**

Field

The present disclosure relates to front-end circuits for wireless power receivers, integrated circuits including such front-end circuits, near field communication devices, and mobile communication devices including such front-end circuits. It further relates to methods of receiving power wirelessly.

Background

Typical wireless power receivers include an antenna which may be in the form of a coil. In the presence of an applied varying magnetic field, the induced magnetic field in the loop generates an AC current and an AC voltage. By rectifying and smoothing the AC voltage, the receiver may harvest power from the magnetic field. The power may be stored for instance in a capacitor, and typically after a DC to DC conversion or being supplied to a voltage regulator, may be used in the device or apparatus with which the receiver is associated or into which it is integrated. Example devices may be mobile devices such as smart phones tablets and the like. Other applications may include NFC (Near Field Communication) devices, in which the received power may be used to operate a microcontroller unit or other functionality, and the antenna is used at other times to transmit a signal incorporating information or data, by modifying the magnetic field.

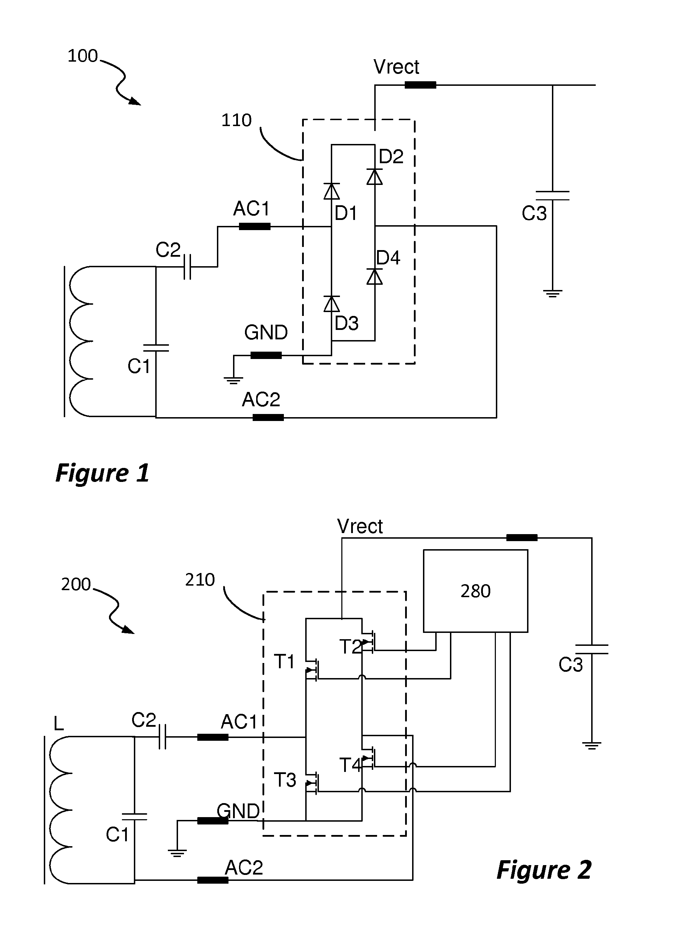

Figure 1 illustrates a generic front-end circuit 100 for a wireless power receiver. The front-end circuit comprises a rectifier 110. As shown the rectifier may be implemented as a full-bridge rectifier which comprises four rectifying elements implemented as diodes D1, D2, D3 and D4. The rectifier 110 may form part of an integrated circuit (not shown), having contact pads or input terminals AC1 and AC2 on the input, or AC, side of the rectifier, and output pads, one at a zero voltage ground (GND) and one at an output voltage (Vrect) on the output, or DC, side of the rectifier. In order to ensure that the output voltage (Vrect) is sufficiently stable to be usable, one or more decoupling capacitors C3, also referred to as smoothing capacitors, may be connected between the output voltage and ground as shown.

In the event of a rapid change to the strength of the applied magnetic field, and in particular in the event that the applied magnetic field is a very strong, the voltage and current generated in the antenna may be more than is required or desired.

Summary

According to a first aspect of the present disclosure, there is provided a front-end circuit for a wireless power receiver, the circuit comprising: input terminals for connection to an antenna; a rectifier configured to rectify an AC signal having a peak input voltage received at the input terminals and to provide an output having an output voltage; an over-voltage detector configured to at least one of detect the output voltage exceeding a threshold voltage an overvoltage and detect the peak input voltage exceeding the threshold voltage; and an over-voltage controller configured to provide an electrical short-circuit across the input terminals in response to the respective output voltage or peak input voltage exceeding the threshold voltage. Providing a short-circuit across the input terminals may reduce one or other of the power dissipated, and efficiency losses, associated with other methods of providing overvoltage protection or overvoltage clamping.

In one or more embodiments, the rectifier comprises two rectifying elements configured as a half-bridge rectifier. In other embodiments, the rectifier comprises four rectifying elements configured as a full-bridge rectifier. A full bridge rectifier may generally be more efficient compared with a half-bridge rectifier.

In one or more embodiments, the front-end circuit further comprises a synchronous rectification controller, and at least two of the rectifying elements are switches adapted to be controlled by the synchronous rectification controller to provide synchronous rectification. Use of switches, such as transistors, to provide synchronous rectification may typically result in lower loss than use of diodes to provide passive rectification. In one or more embodiments the over-voltage controller is configured to, in response the output voltage exceeding the threshold voltage, control two of the switches to be in a closed state to provide the electrical short-circuit. In one or more other embodiments the over-voltage controller is configured to, in response the output voltage exceeding the threshold voltage, control one of the switches to be in a closed state to provide the electrical short-circuit. In such embodiments the short circuit might occur during only one of each pair of half-cycles which generally constitute an AC cycle. In such embodiments, the reduction of power transferred is smaller than the reduction or cessation of power transfer which is associated with shorting the inputs terminals.

In one or more embodiments, the over-voltage detector is further adapted to a detect the output voltage exceeding a second threshold voltage, and the controller is further configured to, subsequent to providing the electrical short-circuit, break the short-circuit in response to the output voltage not exceeding the second threshold voltage.

Breaking the short-circuit - which may generally be achieved by opening one or more of the switches used to form the short-circuit and thus may also be referred to as opening the short-circuit, or disabling the voltage clamping - may enable effective transfer of power to recommence, thereby preventing an under-voltage situation. An apparatus or device which is associated with the front-end circuit might thereby be enabled to continue operation, without having to shut-down in response to an overvoltage situation resulting in an under-voltage situation.

In one more embodiments, the front-end circuit further comprises the antenna wherein the antenna is a loop antenna configured to generate the AC signal from a varying magnetic field. The front-end circuit may further comprise a decoupling capacitor connected between the output and a ground, for smoothing the output voltage. Such a decoupling capacitor may alternatively be known as a smoothing capacitor.

According to another aspect, there is provided an integrated circuit, for a wireless power transfer receiver and comprising a front-end circuit as described above, and at least one of a regulated voltage output, an unregulated voltage output, and a communication interface, wherein the front-end circuit is configured to provide power to at least one of the other functional blocks of the integrated circuit.

According to a further aspect, there is provided a near field communication (NFC) device comprising a front-end circuit as described above. The NFC device may be adapted to, in a transmit mode, modify an impedance at the input terminals to change a magnetic field at the antenna.

According to a yet further aspect, there is provided a mobile device. The mobile device comprises at least one of an integrated circuit and a near field communication device as described above. The mobile device may further comprise a memory block, wherein the front-end circuit is configured to provide power to at least the memory block.

According to another aspect, there is provided controller configured to control a front end circuit as described above, and comprising: at least one of an output voltage input for receiving a signal representative of the output voltage, and a peak input voltage input for receiving a signal representative of the peak input voltage; an over-voltage detector unit configured to use the respective signal representative of the output voltage and the signal representative of the peak input voltage, to at least one of detect the output voltage exceeding a threshold voltage an overvoltage and detect the peak input voltage exceeding the threshold voltage; and an over-voltage controller configured to provide the electrical short-circuit across the input terminals in response to the respective output voltage or peak input voltage exceeding the threshold voltage.

According to a different aspect, there is provided a method of providing over-voltage protection to a resonant wireless power transfer receiver, the method comprising: rectifying an AC signal received at input terminals to provide an output having an output voltage; one of detecting the output voltage exceeding a threshold voltage and detecting the voltage across the input terminals exceeding a threshold voltage; and providing an electrical short-circuit across the input terminals in response to the respective output voltage or the voltage across the input terminals exceeding the threshold voltage.

The method may include rectifying an AC signal received at input terminals to provide an output having an output voltage comprises actively controlling at least two switches in a rectifier circuit to provide synchronous rectification, and providing an electrical short-circuit across the input terminals comprises controlling two of the switches to be in a closed state.

These and other aspects of the invention will be apparent from, and elucidated with reference to, the embodiments described hereinafter.

Brief description of Drawings

Embodiments will be described, by way of example only, with reference to the drawings, in which

figure 1 illustrates a generic front-end circuit for a wireless power receiver;
figure 2 illustrates another front-end circuit for a wireless power receiver;
figure 3 illustrates circuit configurations which accommodate an over-voltage situation in a front-end circuit for a wireless power receiver;
figure 5 illustrates a front-end circuit for a wireless power receiver according to embodiments;
figure 6(1) illustrates a front-end circuit for a wireless power receiver according to other embodiments;
figure 6(2) illustrates a front-end circuit for a wireless power receiver according to other embodiments;
figure 7 illustrates the magnetic field, and output voltage, during an over-voltage event;
figure 8 shows a block diagram of a mobile device according to embodiments; and
figure 9 shows a flow-diagram of an example method according to one or more embodiments.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments

Detailed description of embodiments

Figure 2 illustrates a front-end circuit 200 for a wireless power receiver. The front-end circuit 200 is similar to that shown in figure 1, and comprises a rectifier 210. In this circuit diodes D1-D4 are replaced by switches T1 - T4 as the rectifying elements in the rectifier 210. As shown, the switches T1 - T4 may typically be implemented as transistors. In order to rectify the varying input voltage across the rectifier inputs, the switches are opened and closed at appropriate moments, under control of a controller 280, to implement so-called "active" or synchronous rectification: whenever one of the rectifying elements is required to block current flow (that is to say when there is a negative voltage across it), that switch is opened; conversely whenever the element is required to allow current flow (that is to say when there is a positive voltage cross it) that switch is closed. As will be familiar to the skilled person, the switches thus act in a similar manner to the diodes in a conventional "passive" rectifier. However by using switches instead of diodes, the forward voltage drop (typically approximately 0.7V) associated with forward current flow through a diode may be avoided. In the case that transistors are used as the switches, the losses due to the forward voltage drop across the diode are replaced by the losses associated with $R_{DS-ON}$.

As long as the power consumed from the rectifier output is equivalent to the power being received from the wireless power receiver antenna/coil, the output-voltage is stable and can be controlled within the allowed operating voltage range of the receiver and further connected circuits. However. a sudden change of the load connected to the rectifier output will lead to an increase of the rectifier output voltage. Depending on the time required and/or the general ability to reduce the wireless power transmitter's energy, the rectifier voltage might exceed allowed and safe levels and could damage the rectifier itself and/or connected circuits. Therefore, the rectifier output voltage should be kept below a maximum threshold. This threshold might be dependent on any of technology, system or regulatory constraints.

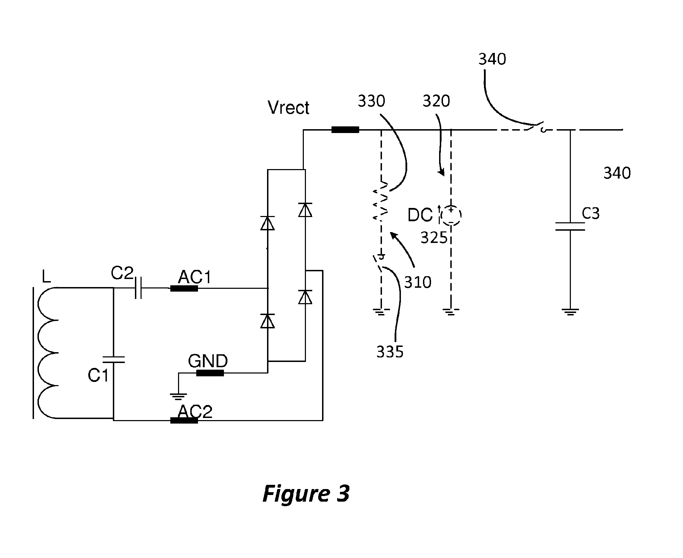

Figure 3 illustrates a front-end circuit for a wireless power receiver, similar to that shown in figure 1, including different approaches to accommodate such an over-voltage situation.

One option or approach is to add a switchable load 310 or a controllable load 320 to the rectifier output. Such a load is generally referred to as a bleeder load. A switchable load may comprise a resistive element 330 switchedly connectable between the output voltage and ground by a switch 335, as shown. A controllable load 320 may be implemented as a variable current sink 325 as shown. Both (as shown), or just one or the other may be included. The load is enabled to drain power from the rectifier output and level the rectifier output voltage. Due to the antenna/system impedance, the maximum current that can be drawn from the wireless power receiver antenna is limited, so the maximum current depends on the basic system implementation.

In this approach, the power dissipated equals the maximum current that can be delivered from the receiver antenna multiplied by the output voltage. Furthermore, the typically connected decoupling capacitors are discharged resulting in an additional power loss:

$$Pdrain = Vrect * Idrain$$

where Idrain is the discharge current. Furthermore, in the case that the wireless power source is not a controlled wireless power transmitter but a different source that emits power in the same frequency range the receiver typically works in, the only guaranteed power limit would be the receiver antenna coil impedance and the antenna's natural maximum current delivery capability (I coilmax). In this case, the maxim power dissipated would equal

$$Pdrain = Rload* Icoilmax2$$

for a resistive load path with Resistance Rload, or

$$Pdrain = Icoilmax * Vrect,$$

for a controlled current sink. The power dissipation can be significant, as the rectifier output voltage has to be kept in a range such that the wireless power receiver is still operation, and thus may be undesirable.

Another approach, which may be used in conjunction with or independently from the additional load approach, is to connect through a switch 340 to additional connected circuits so that the rectifier can be disconnected from the decoupling/low-pass capacitors in an over-voltage event. An advantage of this approach is that the capacitors are not actively discharged by the controlled discharge path. However, the switch connecting the rectifier output and any additional circuit introduces at least some additional losses during regular operation.

Due to the losses involved, both of these approaches reduce the performance of the device.

According to one of more embodiments in the present disclosure a front-end circuit comprises: input terminals for connection to an antenna; a rectifier configured to rectify an AC signal having a peak input voltage received at the input terminals and to provide an output having an output voltage; an over-voltage detector configured to at least one of detect the output voltage exceeding a threshold voltage an overvoltage and detect the peak input voltage exceeding the threshold voltage; and an over-voltage controller configured to provide an electrical short-circuit across the input terminals in response to the respective output voltage or peak input voltage exceeding the threshold voltage. The front-end circuit may be for a resonant or inductive power converter.

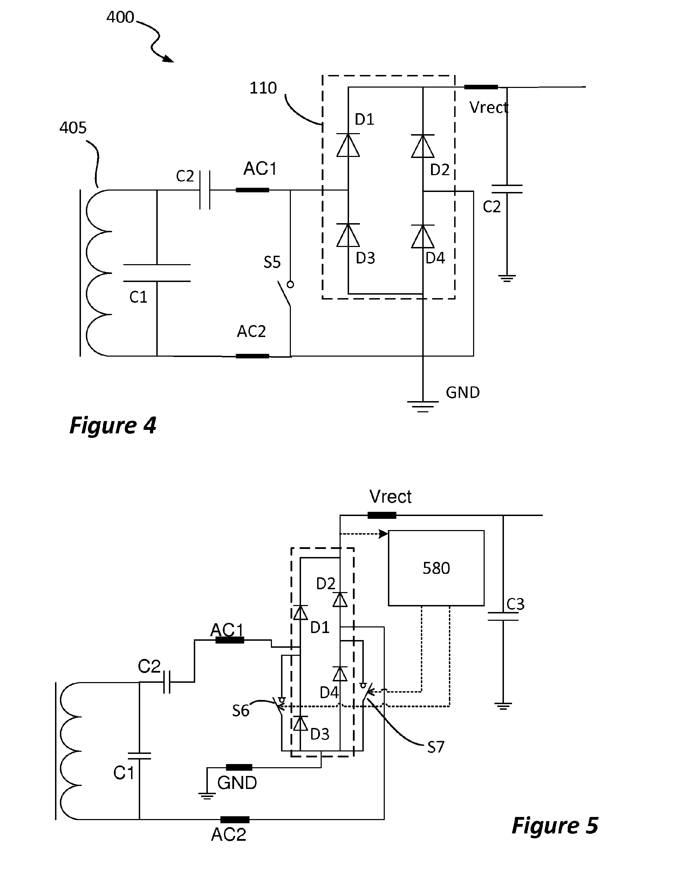

Figure 4 illustrates one such arrangement. The front-end circuit 400 illustrated in figure 4 comprises a rectifier 110, which in this instance comprises four diodes D1 - D4, but in other embodiments may comprise four switches or transistors arranged for synchronous rectification, such as shown in rectifier 21, together with one or more decoupling capacitor C3. In other embodiments (not shown), the rectifier may be a half-bridge rectifier. Input terminals to the rectifier (AC1 and AC2) are connected to an antenna 405 with associated shunt and series capacitors C1 and C2 respectively. In this embodiment, a switch S5 is provided across the input terminals. The switch is controlled by a controller (not shown). An effect of the switch is to provide a voltage clamping functionality to the rectifier. This clamping function is activated in case of an over-voltage event and shorts the AC inputs (effectively shorting the antenna). Due to the shorting of the antenna, the total power consumption is reduced; the shorting switches may be provided as low ohmic switches, with a low on-resistance Rdson reducing the maximum dissipated power in the circuit to

$$Pdrain = Rdson * Icoilmax2.$$

Figure 5 illustrates a front-end circuit for a wireless power receiver according to one or more further embodiments. This arrangement is similar to that shown in figure 4, except that the switch S5 is replaced by a pair of switches S6 and S7 in parallel with diodes D3 and D4 respectively, which are controlled so as to both be closed in the event of an overvoltage, to short each of the input terminals to ground. The effect is thus to short-circuit the antenna coil, and to connect to the short-circuited coil to ground. The switches are controlled by a controller 580, which monitors the output voltage Vrect. In another embodiment (not shown), switches S6 and S7 are placed in parallel with diodes D1 and D2 respectively, in order to short both sides of the antenna coil to the output voltage Vrect in the event of an overvoltage. Other embodiments (not shown) include only a single switch S6 or S7. In such embodiments the antenna coil may be shorted for just one of the two half-cycles which generally make up a cycle of the AC signal. In such embodiments there may still be a reduction in power transfer, but it may not be as great a reduction as in embodiments in which two switches are closed so as to provide a short for both half-cycles of the AC signal.

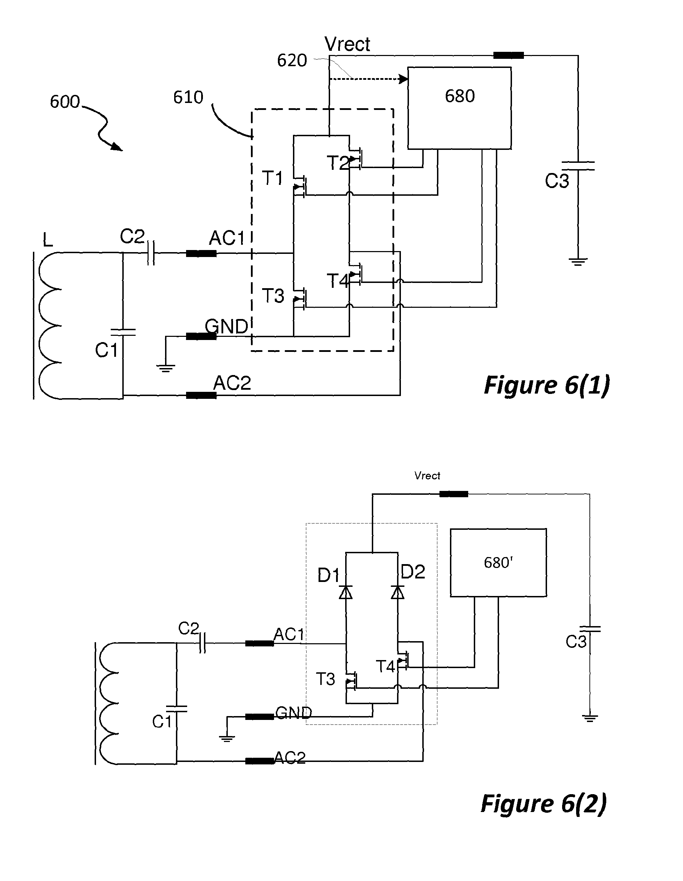

Figure 6(1) illustrates another front-end circuit for a wireless power receiver according to one or more other embodiments. This circuit is generally similar to that shown in figure 5; however in this circuit, at least the two rectifying elements having a parallel switch (S6 or S7), of the rectifier 610, respectively are implemented as switches or transistors. Separate switches S6 and S7 are thus no longer required, since the transistors T3 and T4 (in the case that the input terminals are shorted to ground) or T1 and T2 (in the case that the input terminals are shorted to Vrect) can also provide the functionality of the shorting switches S6 and S7. The transistors are controlled by a controller 680, which monitors the output voltage Vrect The controller controls both the voltage clamping (or short circuiting) during an over-voltage event, and the synchronous rectification of the transistors during normal operation. Since the switches of an active synchronous rectifier are typically designed to be low ohmic switches, the expected power dissipation within the rectifier circuit will generally be much lower than using a using a bleeder path. Further, the AC clamping does not interfere with the charge stored on the decoupling capacitors C3, since these are not involved in the clamping function or even connected to the clamping power path. It will be appreciated that the configuration of this circuit - in terms of the components used - is similar to that shown in figure 2, with the addition of a link 620 from the output voltage Vrect to the controller.

Figure 6(2) illustrates another front-end circuit for a wireless power receiver according to one or more other embodiments. This circuit is generally similar to that shown in figure 6(1), except that the rectifier is comprised to two diodes D1 and D2, and two switches which are implemented as shown as transistors T3 and T4, and thus may be considered as a half-active rectifier. The skilled person will appreciate that the circuit, alternatively, be configured with two diodes in the lower part of the rectifier and two switches in the upper part.

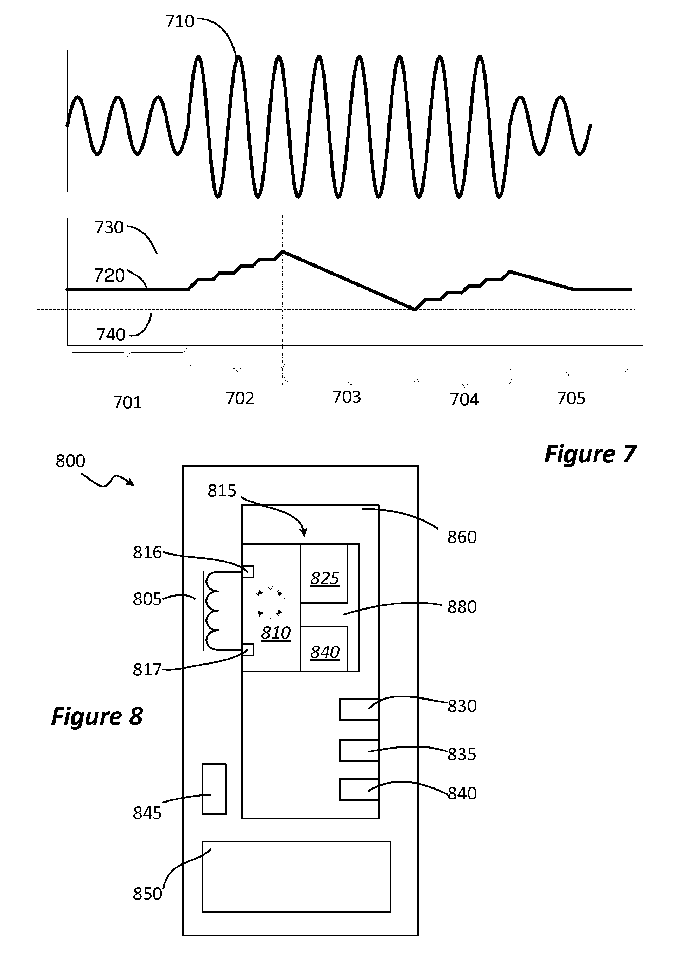

Operation of a front-end circuit in accordance with one or more embodiments will now be described with reference to figure 7. The upper curve 710 of figure 7 shows the strength of the AC magnetic field seen by the antenna.

The lower curve shows the operating voltage, that is to say the voltage Vrect at the output 720. During normal operation, that is the say during interval 701, the field strength is steady and the output voltage Vrect is equal to the normal operation voltage, the operation Voperation. A sudden change in the field strength occurs at the start of period 702. As a result, the load does not consume all the power which is received by the front-end circuit, and the output voltage 702 rises with each alternating cycle of the field at the antenna, as charge is transferred to the decoupling capacitor(s) C3 by the rectifier faster than it is used by the device associated with the front-end circuit. Once the output voltage passes or exceeds the threshold voltage $V_{OVP\ ON}$ 730, shown at the start of interval 703, the overvoltage detector detects that the output voltage 720 has exceeded the threshold, and in response, the overvoltage controller closes the appropriate switches (or switch in the instance of embodiments such as that shown in figure 4) to short-circuit the input terminals. As a result, charge stops been transferred to the decoupling capacitor(s) C3, and in consequence, during the period 703 the output voltage falls.

Once the output voltage 720 falls below a second threshold voltage $V_{OVP\ OFF}$ 740, the controller reopens the switches to break the short-circuit across the input terminals. Of course, the skilled person will appreciate that in embodiments such as that shown in figure 7, the controller may only open one of the two short-circuiting switches, since during normal operations one of the switches would be closed in order to provide synchronous rectification.

In consequence, the rectifier recommences charging the decoupling capacitor C3, and the output voltage starts to rise, as shown at the start of interval 704. The skilled person will appreciate that were the strong magnetic field to remain, the output voltage would rise again to the first threshold value 730, resulting in a repetition of the short-circuiting process. As shown in figure 7, however, provided the magnetic field reverts to its normal level before the overvoltage protection threshold level 730 is reached, operation may revert back to normal operation, as shown through intervals and 704 and 705.

Figure 7 has been described with respect to detection of the overvoltage event by comparing the output voltage with a threshold voltage. In other embodiments, detection of the overvoltage event may be by comparing a peak input voltage with the threshold voltage. However, it will be appreciated that once the input terminals have been short-circuited, the peak input voltage may be expected to fall to zero, because of the short-circuit. It may thus still be appropriate to disable the clamping circuit, that is to say break the short-circuit, based on the DC voltage falling below are not exceeding the second threshold voltage. Without such an ability to break the short-circuit and thus disable the overvoltage clamping, the output voltage could continue to fall, below the second threshold voltage. As the voltage continues to fall, any general communication section of the wireless power receiver would eventually be unable to function. Typically, for wireless power transfer, without this communication unit being active and sending information to the power transmitter, all wireless power systems switch off their power, which is clearly generally undesirable

In one or more other embodiments, an alternative method they may be used to disable clamping again, that is to say, to break the short-circuit, without measuring the rectifier output voltage and comparing it with the second threshold voltage 740 as described above. In such embodiments, in particular those in which the switches short-circuit the antenna to ground, the current going through the transistors while they short the antenna to ground is monitored. Provided that the transmitter is notified that clamping is enabled - that is to say, the receiver antenna is short-circuited - and reduces its power output, the receiver may wait for a decrease of peak current to disable the shorts again. In particular, to the extent that shorting the antenna does not detune it, the antenna will continue to deliver power AC, and generating AC current through the shorting transistors. Of course, in this case a significant voltage will not be built up.

Figure 8 shows a block diagram of a mobile device 800 according to embodiments. The mobile device comprises a front-end circuit 815, having inputs 816 and 817 to which an antenna 805 is connected. The front-end circuit includes a rectifier 810, controller 880 and overvoltage detector 825 Rectifier 810 typically comprises switches or transistors T1 - T4, which are controlled to provide active synchronous rectification by controller 880. Controller 880 also provides overvoltage control functionality. Overvoltage detector 825 monitors the voltage at the output of the rectifier. The front-end circuit 815 may form part of an integrated circuit 860. The integrated circuit 860 may include any of a voltage regulator configured to provide a regulated voltage at a regulated voltage output 830, and unregulated voltage output 835, and a communication interface 840. The integrated circuit 860 may include other functionality (not shown). The mobile device may include one or more memory blocks 845, one or more or each of which may be separate to the integrated circuit as shown or may be integral to and including the integrated circuit. The mobile device may comprise a graphical user interface. Without limitation, the mobile device may be a communication device such as a smart phone, a tablet or a so-called wearable device.

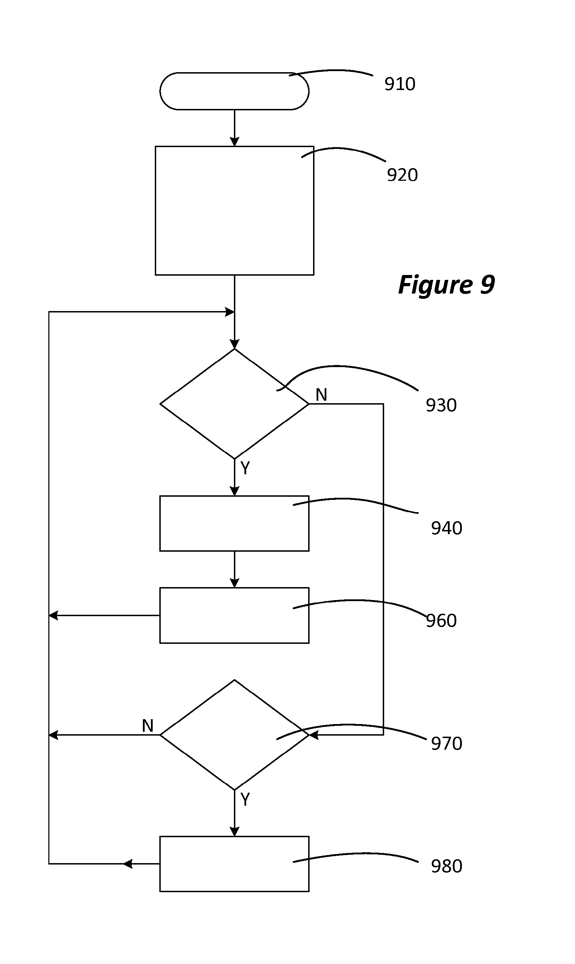

Figure 9 illustrates a method of providing overvoltage protection to a resonant wireless power transfer receiver according to embodiments. After the system is reset at 910, in initial state at 920 an overvoltage protection flag OVP is low, and the rectifier pins AC are ungrounded. In this state the circuit operates to rectify an AC signal received at input terminals to provide an output having an output voltage.

At 930 the method detects whether the output voltage exceeds a threshold voltage $V_{OPN\ ON}$. T

In the event that the output voltage exceeds the threshold voltage, the method continues by, at 940, setting the OVP flag to high, and providing an electrical short-circuit across the input terminals in response to the output voltage exceeding the threshold voltage, shown at 960. The method then returns to 930, to recheck whether the output voltage exceeds the threshold.

In the event that the output voltage does not the threshold voltage, in this embodiment the method then continues by, at 970, detecting whether the output voltage exceeds a second threshold voltage $V_{OPN\ OFF}$. If it is detected that the output voltage does not exceed the second threshold voltage, the short-circuit is broken, thereby disabling the voltage clamping, and ungrounding the AC pins, at 980. The method then reverts to step 910.

From reading the present disclosure, other variations and modifications will be apparent to the skilled person. Such variations and modifications may involve equivalent and other features which are already known in the art of wireless power receivers, and which may be used instead of, or in addition to, features already described herein. In particular, the skilled person that the switches need not be implemented by a single transistors as shown, but for instance could be implemented as a pair of transistors in parallel, or other switchable electronic component which has, in forward conduction i.e. closed state, a lower loss than that attributable to a diode

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, and reference signs in the claims shall not be construed as limiting the scope of the claims.

List of reference signs:

| | |
|---|---|
| 100, 200, 300, 400 | front-end circuit |
| 110 | rectifier |
| 210 | rectifier |
| 280 | controller |
| 310 | switchable load |
| 320 | controllable load |
| 325 | variable current sink |
| 330 | resistive element |
| 335 | switch |
| 340 | switch |
| 405 | antenna |
| 580 | controller |
| 620 | output voltage |
| 630 | threshold voltage $V_{OVP}$ ON |
| 601, 602, 603, 604, 605 | interval |
| 680 | controller |
| 681 | controller |
| 800 | mobile device |
| 805 | antenna |
| 815 | front-end circuit |
| 816, 817 | inputs |
| 825 | overvoltage detector |
| 840 | communication interface |
| 830 | regulated voltage output |
| 835 | unregulated voltage output |
| 860 | integrated circuit |
| 880 | controller |
| AC1 and AC2 | input terminals |

| C1 | shunt capacitor |
| C2 | series capacitor |
| C3 | decoupling capacitor |
| D1 - D4 | diodes |
| S6 | switch |
| S7 | switch |
| T1 - T4 | switches |

**Claims**

1. A front-end circuit for a wireless power receiver, the circuit comprising:

   input terminals for connection to an antenna;
   a rectifier configured to rectify an AC signal having a peak input voltage received at the input terminals and to provide an output having an output voltage;
   an over-voltage detector configured to at least one of detect the output voltage exceeding a threshold voltage an overvoltage and detect the peak input voltage exceeding the threshold voltage; and
   an over-voltage controller configured to provide an electrical short-circuit across the input terminals in response to the respective output voltage or peak input voltage exceeding the threshold voltage.

2. A front-end circuit according to claim 1, wherein the rectifier comprises two rectifying elements configured as a half-bridge rectifier.

3. A front-end circuit according to claim 1, wherein the rectifier comprises four rectifying elements configured as full-bridge rectifier.

4. A front-end circuit according to claim 2 or 3, further comprising a synchronous rectification controller, and wherein at least two of the rectifying elements each is a switch adapted to be controlled by the synchronous rectification controller to provide synchronous rectification.

5. A front-end circuit according to claim 4, wherein the over-voltage controller is configured to, in response the output voltage exceeding the threshold voltage, control two of the switches to be in a closed state to provide the electrical short-circuit.

6. A front-end circuit as claimed in any of claims 2 to 5, wherein the over-voltage detector is further adapted to a detect the output voltage exceeding a second threshold voltage, and the controller is further configured to, subsequent to providing the electrical short-circuit, break the short-circuit in response to the output voltage not exceeding the second threshold voltage.

7. A front-end circuit according to any of claims 2 to 6, further comprising the antenna wherein the antenna is a loop antenna configured to generate the AC signal from a varying magnetic field.

8. A front-end circuit according to any of claims 2 to 7, further comprising a decoupling capacitor connected between the output and a ground.

9. An integrated circuit, for a wireless power transfer receiver and comprising a front-end circuit according to any of claims 2 to 8, and at least one of a regulated voltage output, an unregulated voltage output and a communication interface, wherein the front-end circuit is configured to, in operation, provide power to the at least one of a regulated voltage output, an unregulated voltage output and a communication interface.

10. A near field communication device comprising a front-end circuit according to any of claims 2 to 8 and adapted to, in a transmit mode, modify an impedance at the input terminals to change a magnetic field at the antenna.

11. A mobile device comprising at least one of an integrated circuit according to claim 9 and a near field communication device according to claim 10, and further comprising a memory block, wherein the front-end circuit is configured to provide power to at least the memory block.

12. A controller configured to control a front end circuit as claimed in any of claims 1 to 8, and comprising:

at least one of an output voltage input for receiving a signal representative of the output voltage, and a peak input voltage input for receiving a signal representative of the peak input voltage ;

an over-voltage detector unit configured to use the respective signal representative of the output voltage and the signal representative of the peak input voltage, to at least one of detect the output voltage exceeding a threshold voltage an overvoltage and detect the peak input voltage exceeding the threshold voltage; and

an over-voltage controller configured to provide the electrical short-circuit across the input terminals in response to the respective output voltage or peak input voltage exceeding the threshold voltage.

13. A method of providing over-voltage protection to a resonant wireless power transfer receiver, the method comprising:

rectifying an AC signal received at input terminals to provide an output having an output voltage;

one of detecting the output voltage exceeding a threshold voltage and

detecting the voltage across the input terminals exceeding a threshold voltage; and

providing an electrical short-circuit across the input terminals in response to the respective output voltage or the voltage across the input terminals exceeding the threshold voltage.

14. The method of claim 13, wherein

rectifying an AC signal received at input terminals to provide an output having an output voltage comprises actively controlling at least two switches in a rectifier circuit to provide synchronous rectification, and providing an electrical short-circuit across the input terminals comprises controlling two of the switches to be in a closed state.

**Amended claims in accordance with Rule 137(2) EPC.**

1. A front-end circuit (400) for a wireless power receiver, the circuit comprising:

input terminals for connection to an antenna (405);

a rectifier (110) configured to rectify an AC signal having a peak input voltage received at the input terminals and to provide an output having an output voltage;

an over-voltage detector (825) configured to at least one of detect the output voltage exceeding a threshold voltage and detect the peak input voltage exceeding the threshold voltage; and

an over-voltage controller (580) configured to provide an electrical short-circuit across the input terminals in response to the respective output voltage or peak input voltage exceeding the threshold voltage,

wherein the over-voltage detector is further adapted to detect the output voltage exceeding a second threshold voltage, and the controller is further configured to, subsequent to providing the electrical short-circuit,

break the short-circuit in response to the output voltage not exceeding the second threshold voltage..

2. A front-end circuit according to claim 1, wherein the rectifier comprises two rectifying elements configured as a half-bridge rectifier.

3. A front-end circuit according to claim 1, wherein the rectifier comprises four rectifying elements (D1, D2, D3, D4) configured as full-bridge rectifier.

4. A front-end circuit according to claim 2 or 3, further comprising a synchronous rectification controller, and wherein at least two of the rectifying elements (T1, T2) each is a switch adapted to be controlled by the synchronous rectification controller to provide synchronous rectification.

5. A front-end circuit according to claim 4, wherein the over-voltage controller is configured to, in response the output voltage exceeding the threshold voltage, control two of the switches to be in a closed state to provide the electrical short-circuit.

6. A front-end circuit according to any of claims 1 to 5, further comprising the antenna wherein the antenna is a loop antenna configured to generate the AC signal from a varying magnetic field.

7. A front-end circuit according to any of claims 1 to 6, further comprising a decoupling capacitor connected between the output and a ground.

8. An integrated circuit (860), for a wireless power transfer receiver and comprising a front-end circuit according to any of claims 1 to 7, and at least one of a regulated voltage output, an unregulated voltage output and a communication interface, wherein the front-end circuit is configured to, in operation, provide power to the at least one of a regulated voltage output, an unregulated voltage output and a communication interface.

9. A near field communication device comprising a front-end circuit according to any of claims 1 to 7 and adapted to, in a transmit mode, modify an impedance at the input terminals to change a magnetic field at the antenna.

10. A mobile device (800) comprising at least one of an integrated circuit (860) according to claim 8 and a near field communication device according to claim 9, and further comprising a memory block (845), wherein the front-end circuit is configured to provide power to at least the memory block.

11. A controller configured to control a front end circuit as claimed in any of claims 1 to 7, and comprising:

at least one of an output voltage input for receiving a signal representative of the output voltage, and a peak input voltage input for receiving a signal representative of the peak input voltage ;
an over-voltage detector unit configured to use the respective signal representative of the output voltage and the signal representative of the peak input voltage, to at least one of detect the output voltage exceeding a threshold voltage and detect the peak input voltage exceeding the threshold voltage; and
an over-voltage controller configured to provide the electrical short-circuit across the input terminals in response to the respective output voltage or
peak input voltage exceeding the threshold voltage,
wherein the over-voltage detector is further adapted to detect the output voltage exceeding a second threshold voltage, and the controller is further configured to, subsequent to providing the electrical short-circuit,
break the short-circuit in response to the output voltage not exceeding the second threshold voltage.

12. A method of providing over-voltage protection to a resonant wireless power transfer receiver, the method comprising:

rectifying an AC signal received at input terminals to provide an output having an output voltage;
one of detecting the output voltage exceeding a threshold voltage and
detecting the voltage across the input terminals exceeding a threshold voltage; and
providing an electrical short-circuit across the input terminals in response to the respective output voltage or the voltage across the input terminals exceeding the threshold voltage,
and subsequent to providing the electrical short-circuit, break the short-circuit in response to the output voltage not exceeding the second threshold voltage.

13. The method of claim 12, wherein
rectifying an AC signal received at input terminals to provide an output having an output voltage comprises actively controlling at least two switches in a rectifier circuit to provide synchronous rectification, and providing an electrical short-circuit across the input terminals comprises controlling two of the switches to be in a closed state.

**Figure 1**

**Figure 2**

**Figure 3**

**Figure 4**

**Figure 5**

Figure 6(1)

Figure 6(2)

710

730
720
740

701  702  703  704  705

*Figure 7*

800

815

816
805
817

860

825

810

840

880

830
835
840

845

850

*Figure 8*

910

920

*Figure 9*

N
930

Y

940

960

N
970

Y

980

Europäisches
Patentamt

European
Patent Office

Office européen
des brevets

# EUROPEAN SEARCH REPORT

**Application Number**

EP 14 18 9224

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/265610 A1 (BAKKER ANTON [US] ET AL) 18 September 2014 (2014-09-18)<br>* figure 1 *<br>* figures 4-6 *<br>* paragraph [0004] *<br>* paragraph [0026] *<br>* paragraph [0036] *<br>* paragraph [0045] - paragraph [0051] *<br>* paragraph [0058] *<br>----- | 1-14 | INV.<br>H02M1/32 |
| X | US 2014/252956 A1 (SCHMITT HARALD [DE]) 11 September 2014 (2014-09-11)<br>* figures 1-3 *<br>* paragraph [0031] - paragraph [0037] *<br>----- | 1-3,13 | |

**TECHNICAL FIELDS SEARCHED (IPC)**

H02M

The present search report has been drawn up for all claims

| Place of search | Date of completion of the search | Examiner |
|---|---|---|
| The Hague | 14 April 2015 | Riehl, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 18 9224

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2015

| Patent document cited in search report | Publication date | Patent family member(s) | Publication date |
|---|---|---|---|
| US 2014265610 A1 | 18-09-2014 | US 2014265610 A1<br>WO 2014159922 A1 | 18-09-2014<br>02-10-2014 |
| US 2014252956 A1 | 11-09-2014 | CN 104039034 A<br>DE 102013203732 A1<br>US 2014252956 A1 | 10-09-2014<br>11-09-2014<br>11-09-2014 |

EPO FORM P0459

For more details about this annex : see Official Journal of the European Patent Office, No. 12/82